# EUROPEAN PATENT APPLICATION

(11) **EP 2 722 558 A1**
(43) Date of publication of application: **23.04.2014**
(21) Application number: 12802058.3
(22) Date of filing: 23.05.2012
(51) Int. Cl.: F16H 35/10, F16D 7/02, F16D 7/04

(54) **POWER TRANSMISSION DEVICE AND COMPRESSOR EQUIPPED WITH POWER TRANSMISSION DEVICE**

(30) Priority: 20.06.2011 JP 2011135938
(71) Applicant: Sanden Corporation, Isesaki-shi, Gunma 372-8502 (JP)
(72) Inventor: ICHINOSE, Hirokazu, Isesaki-shi Gunma 372-8502 (JP)
(74) Representative: Prüfer & Partner GbR European Patent Attorneys
(86) International application number: PCT/JP2012/063182
(87) International publication number: WO 2012/176573

(57) **Abstract**

To prevent components from being damaged, a power transmission device has a torque limiting function to suppress increase in cut-off torque. In the power transmission device, a clamped portion 32c is press-clamped between a flange portion 22 of a hub 20 and each pressing portion 40b of a pressing member 40 fastened to the hub with a rivet 41, and when a torque greater than that predetermined is produced between a pulley 10 and the hub, the clamped portion gets out of the position between each pressing portion and the flange portion, to cut off the power transmission. In such device, the fastening point of the rivet is arranged on a line connecting a rotation center of the shaft and a protrusion 32d, to increase a spring constant of the pressing member, so as to set a friction torque of the clamped portion as a greater value.

## Description

### TECHNICAL FIELD

The present invention relates to a power transmission device that transmits a drive force provided from a drive source of a vehicle to a compressor used in a vehicle air conditioner, for example, and relates to a compressor equipped with the power transmission device.

### BACKGROUND ART

Patent Document 1 discloses a power transmission device that transmits a drive force by press-clamping a part of an elastic member, which is secured to a pulley (driving-side rotating member) rotated by the drive force provided from a vehicle engine, between a hub connected to a rotating shaft end of a compressor (driven-side device) and a clamping plate fastened to the hub, and that has a torque limiting function, in which, when the rotating shaft is overloaded, the clamped portion of the elastic member rotates in a circumferential direction while rotation of a clamping member is restricted, and thereby the clamped portion is released therefrom and elastically returned, so that the transmission of the drive force is cut off.

### CITATION LIST

### PATENT DOCUMENT

Patent Document 1: Japanese Laid-open Patent Application Publication No. 2007-107561

### SUMMARY OF THE INVENTION

### PROBLEMS TO BE SOLVED BY THE INVENTION

In such a power transmission device, if a clamping force clamping the elastic member becomes insufficient, clamped friction surfaces slightly move relative to each other when excessive torque variations or vibrations are transmitted thereto from the engine or the compressor main body, and a friction coefficient is increased thereby. Thus, an initial value of a power transmission cut-off torque including a friction force increases, and accordingly, a driving belt, a bearing supporting a pulley, or the like may be damaged.

As disclosed in the Patent Document 1, in a conventional device, the fastened location of the hub and the elastic pressing member, for press-clamping the elastic member, are set at a location equidistant from adjacent clamped portions (location at 60 degrees, that is, a half of 120 degrees, which is an angle formed between the adjacent clamped portions, when the number of clamped portions is three).

In this case, each pressing portion of the pressing member can be elastically deformed on an outer peripheral side of a line connecting the fastened locations on both sides of the pressing portion, and because of a long distance between the line and clamped area, the pressing portion acts as an elastic body having a small spring constant, and accordingly, it may be difficult to ensure a greater friction force on clamped friction surfaces. Thus, a cut-off torque may be increased from an initial set value, so that the driving belt, the bearing supporting the pulley, or the like may be damaged.

The present invention has been achieved in view of such conventional problems, and an object of the present invention is to provide a power transmission device that suppresses an increase in a cut-off torque from an initial set value, to prevent components from being damaged.

### MEANS FOR SOLVING THE PROBLEMS

Thus, a power transmission device according to an aspect of the present invention includes: a driven-side rotating member that is connected to a rotating shaft end of a driven-side device; a driving-side rotating member that is rotated by a drive force provided from outside and concentrically disposed on an outer peripheral side of the rotating shaft end; an elastic pressing member that is fastened to one of the driven-side rotating member and the driving-side rotating member with a plurality of rivets at fastening portions arranged around an axis of the rotating shaft, the pressing member including a plurality of pressing portions that protrudes outward or inward from the fastening portions in a diameter direction and is arranged around the axis of the rotating shaft; and an elastic member that is secured to the other of the driven-side rotating member and the driving-side rotating member, and includes a plurality of clamped portions, each of the clamped portions being press-clamped between the one of the driving-side rotating member and the driven-side rotating member and each of the pressing portions in a state that the clamped portion is elastically deformed in an axial direction of the rotating shaft, to transmit a drive force of the driving-side rotating member to the driven-side rotating member, in which the power transmission device has a torque limiting function in which when the rotating shaft is overloaded, the clamping of the clamped portion is released in a rotation direction, and the clamped portion is returned elastically thereby, so that a power transmission from the driving-side rotating member to the driven-side rotating member is cut off, and the power transmission device is configured as follows.

A fastening point of the rivet is arranged around the axis of the rotating shaft and at a location closer to one of the adjacent clamped portions than a location which is equidistant from the adjacent clamped portions.

Furthermore, a compressor according to an aspect of the present invention is equipped with the power transmission device having this configuration.

### EFFECT OF THE INVENTION

The fastening point fastened with the rivet is arranged closer to the clamped portion, and a spring constant of the pressing member increases thereby, resulting in an increase in a clamping force that press-clamps the clamped portion of the elastic member. As a result, the friction force of the clamped portion increases, and thereby the slight movements of the friction surfaces due to vibrations transmitted from an external drive source, torque variations of a driven device, or the like, can be suppressed, the increase in the cut-off torque can be suppressed, and driving-side components, or the like, can be prevented from being damaged.

### BRIEF DESCRIPTION OF THE DRAWINGS

FIG. 1 is a side cross-sectional view illustrating a power transmission device according to an embodiment of the present invention;
FIG. 2 is a cross-sectional view taken along with a line A-A of FIG. 1;
FIG. 3 is a cross-sectional view taken along with a line B-B of FIG. 2;
FIG. 4 is an explanatory view of operation of the power transmission device;
FIG. 5 is an explanatory view of operation of the power transmission device;
FIG. 6 is a front view of an elastic member; and
FIG. 7 is an explanatory view illustrating effects of the present embodiment.

### MODE FOR CARRYING OUT THE INVENTION

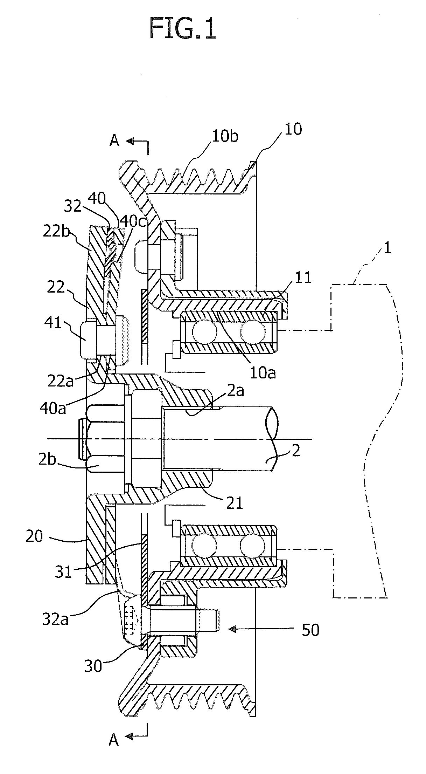

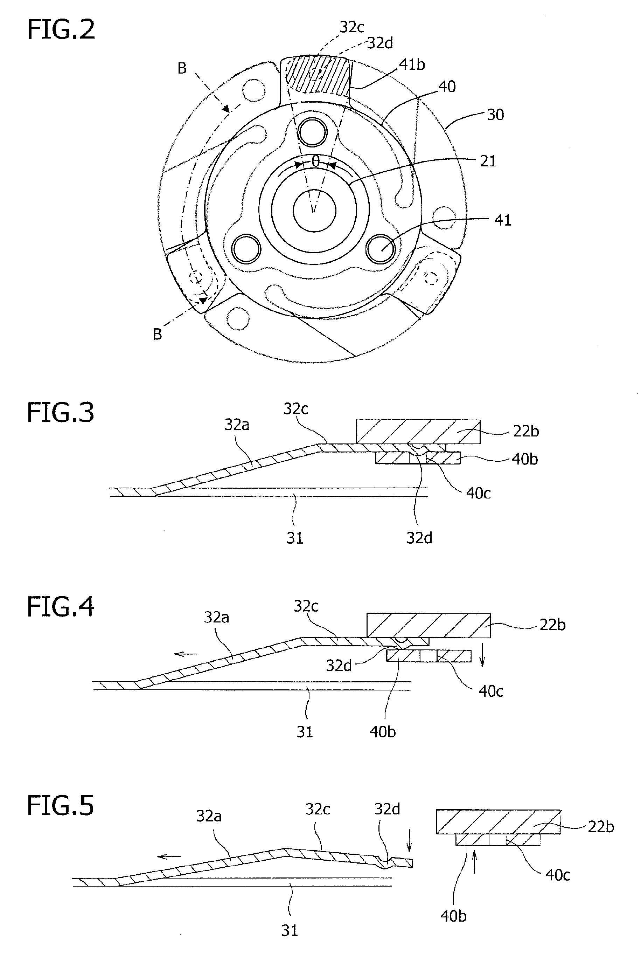

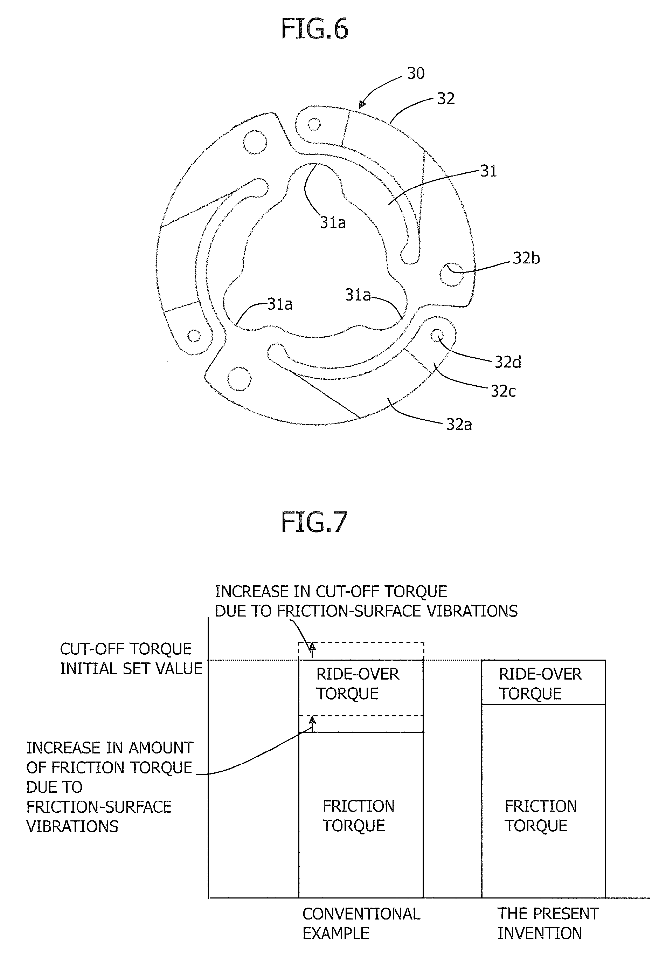

FIGS. 1 to 7 illustrate an embodiment of the present invention. FIG. 1 is a side cross-sectional view illustrating a power transmission device, FIG. 2 is a cross-sectional view taken along with a line A-A of FIG. 1, FIG. 3 is a cross-sectional view taken along with a line B-B of FIG. 2, FIGS. 4 and 5 are explanatory views of operation of the power transmission device, FIG. 6 is a front view of an elastic member, and FIG. 7 is an explanatory view illustrating effects of the present embodiment.

The power transmission device according to the present embodiment is applied as a device which transmits a drive force provided from an external drive source, such as a vehicle engine, a motor, or the like, to a compressor (driven device) of a vehicle air conditioner. However, the power transmission device is not limited to the device which transmits the drive force to the compressor.

The present power transmission device includes: a pulley 10; a bearing 11 that rotatably supports an inner peripheral surface 10a of the pulley 10; a hub 20 that is disposed to face in an axial direction of the pulley 10; an elastic member 30 that is disposed in a gap formed between the pulley 10 and a flange portion 22 of the hub 20 in the axial direction; a pressing member 40 that presses a part of the elastic member 30 to the hub 20; and a buffer mechanism 50 that is disposed on the pulley 10 and elastically supports the elastic member 30 on the pulley 10.

The pulley 10, that is a driving-side rotating member, can be wrapped therearound with a V-belt (not illustrated) on an outer peripheral surface thereof. The pulley 10 is rotatably supported to a compressor 1 via the bearing 11. On an outer peripheral surface of a tubular portion of the pulley 10 extending toward the compressor 1, a plurality of annular grooves 10b is disposed.

The bearing 11 is secured on an outer peripheral surface of a housing of the compressor 1, and rotatably supports an inner peripheral surface 10a of the pulley 10.

The hub 20, that is a driven-side rotating member, includes: a cylindrical connection portion 21 for connecting the hub 20 to a shaft (rotating shaft) 2 of the compressor 1; and a disk-shape flange portion 22 that is integrally formed with the connection portion 21 and that extends from an axial direction end side of the connection portion 21 opposite to the pulley 10 to the outside in a diameter direction.

An inner peripheral surface of the connection portion 21 engages with a spline 2a, that is disposed on a tip of the shaft 2, in a rotation direction. The connection portion 21 is secured to the shaft 2 with a nut 2b screwed to the tip of the shaft 2.

The flange portion 22 is provided with a plurality of rivet holes 22a spaced apart from each other in a circumferential direction. In addition, the flange portion 22 is provided with a plurality of protruding portions 22b protruding outward and spaced apart from each other in the circumferential direction.

The elastic member 30 is made of a steel plate for a spring, or the like, and includes an annular main body 31, and a plurality of extending portions 32 extending in a circumferential direction of the main body 31 from an outer peripheral side of the main body 31. On a proximal end side of each extending portion 32, the extending portion 32 is integrated with an outer peripheral surface of the main body 31. In addition, at a center portion of each extending portion 32 in the extending direction, an inclined portion 32a inclining from the pulley 10 to the flange portion 22 of the hub 20 is disposed. Furthermore, on the proximal end side of each extending portion 32, an attaching hole 32b is disposed. Still further, the distal side of each extending portion 32 acts as a clamped portion 32c, and the clamped portion 32c is provided with a protrusion 32d protruding toward the pulley.

Furthermore, an inner peripheral surface of the main body 31 has an inner diameter substantially the same as that of the bearing 11. That is, when the elastic member 30 is connected to an axial direction end face of the pulley 10, an inner peripheral surface side of the main body 31 faces the bearing 11 in the axial direction.

On the inner peripheral surface side of the main body 31, a plurality of openings 31a spaced apart from each other in the circumferential direction is disposed. Each opening 31a penetrates through the main body 31 in the axial direction, and an outer side of each opening 31a, in the diameter direction of the main body 31, is positioned on the outside, in the diameter direction, of the inner peripheral surface 10a of the pulley 10.

The pressing member 40 is made of a steel plate for a spring and has a disk shape. The pressing member 40 includes a plurality of rivet holes 40a spaced apart from each other in a circumferential direction.

Furthermore, on an outer peripheral surface of the pressing member 40, a plurality of pressing portions 40b spaced apart from each other in the circumferential direction is disposed, and each pressing portion 40b extends from the outer peripheral surface of the pressing member 40 to the outside in the diameter direction. On each pressing portion 40b, there is disposed an engaging hole 40c penetrating therethrough in the axial direction. Into each rivet hole 22a, 40a of the hub 20 and the pressing member 40, a rivet 41 is inserted, so that the pressing member 40 is secured to the hub 20 with each rivet 41. In this case, each rivet hole 22a, 40a, that is, a fastening point of each rivet 41, is arranged on a line connecting the rotation center of the shaft 2 and each protrusion 32d corresponding thereto.

Each clamped portion 32c of the elastic member 30 is elastically deformed by each pressing portion 40b of the pressing member 40 and pressed toward the hub 20, and the clamped portion 32c is press-clamped by each pressing portion 40b and the flange portion 22 of the hub 20. Furthermore, the protrusion 32d of each extending portion 32 engages with the engaging hole 40c of the each pressing portion 40b in a rotation direction of the pulley 10.

In the power transmission device having a structure as described above, when a drive force is transmitted from an engine (not illustrated) to the pulley 10, a torque of the pulley 10 is transmitted to the hub 20 via the elastic member 30.

Furthermore, since the elastic member 30 is connected to the pulley 10 via the buffer mechanism 50, rotational variations of the torque transmitted from the pulley 10 to the hub 20 is reduced by the buffer mechanism 50.

In contrast, for example, when the shaft 2 of the compressor 1 is overloaded and the rotation is restricted thereby, and then a torque greater than that predetermined is produced between the pulley 10 and the hub 20, the clamped portion 32c gets out of a position between the pressing portion 40b and the flange portion 22. In detail, as illustrated in FIGS. 4 and 5, the torque produced between the pulley 10 and the hub 20 causes each clamped portion 32c to move resisting a pressing force of the pressing member 40. That is, each pressing portion 40b of the pressing member 40 is bent toward the pulley 10 due to the movement of each clamped portion 32c, so that each engagement between the protrusion 32d and the engaging hole 40c is released.

Furthermore, each clamped portion 32c, which has been left the position between the pressing portion 40b and the flange portion 22, moves toward the pulley 10 by an elastically returning force thereof. On the other hand, each pressing portion 40b also moves toward the flange portion 22 by an elastically returning force thereof. Accordingly, after each clamped portion 32c is released, the elastic member 30 is not interfered with by the pressing member 40 and hub 20, and the transmission of torque from the pulley 10 to the hub 20 can be reliably cut off.

In this case, according to the present embodiment, the fastening point, in which an inner periphery side of the pressing member 40 and an inner periphery side of the hub 20 are fastened with the rivet 41, is arranged on the line connecting the rotation center of the shaft 2 and the protrusion 32d, as described above.

In this way, each pressing portion 40b of the pressing member 40 is elastically deformed in a state in which a fulcrum is the fastening point of the rivet 41 (in detail, an outer peripheral end of the rivet 41) and a point of application is a region from the fastening point to the engaging point of the protrusion 32d and the engaging hole 40c, and thus, the pressing portion 40b acts as an elastic body in which a distance from the fulcrum to the point of application is short and which has a large spring constant.

Thus, the pressing portion 40b of the pressing member 40 can clamp the clamped portion 32c of the elastic member with the flange portion 22 of the hub 20 by a greater pressing force.

In this case, a torque at the time when the extending portion 32 gets out of the position between the pressing portion 40b and the flange portion 22, that is, a torque at the time when the power transmission is cut off (hereinafter, referred to as "cut-off torque") is defined as a torque which is a total of a friction torque, that is produced by friction forces acting between the extending portion 32, and the pressing portion 40b and the flange portion 22, and a ride-over torque, that is required to release the protrusion 32d from the engaging hole 40c and to cause the protrusion 32d ride over a plane surface of the pressing portion 40b, as illustrated in FIG. 7.

In the cut-off torque, the friction torque increases when the spring constant of the pressing portion 40b is increased, as described above, to increase a press-clamping force, to thereby increase a friction force of clamped contact surfaces (friction surfaces).

When an initial friction force is set as a greater value, even when vibrations transmitted from the engine or torque variations of the compressor 1 are applied, slight relative movements occurring between the extending portion 32, and the pressing portion 40b and the flange portion 22 can be suppressed, resulting in suppressing an increase in the friction coefficient between the friction surfaces due to the slight movements, and ultimately, suppressing the increase in the friction force, and accordingly, the increase in the friction torque can be suppressed.

On the other hand, the ride-over torque is produced according to a shape (a height, a gradient, or the like) of the protrusion 32d and the press-clamping force, and is maintained to be substantially constant without being affected by the vibrations of the compressor 1.

Thus, by suppressing the increase in the friction torque by arranging the rivet 41 as described above, the increase in the cut-off torque, which is the total of the friction torque and the ride-over torque, from the initial set value can be suppressed.

Since the increase in the cut-off torque can be suppressed as mentioned above, the V-belt wrapped around the pulley 10, the bearing 11 supporting the pulley 10, or the like, can be prevented from being damaged.

When comparing the present embodiment of the present invention with a conventional example, in which the fastening point of the rivet is set at a location equidistant from adjacent clamped portions, a distance in the conventional example from a tangent touching the outer peripheral surfaces of the rivets arranged on both sides of the clamped portion (i.e., fulcrum) to the engaging point of the protrusion and the engaging hole (i.e., point of application) becomes longer. Thus, each pressing portion 40b acts as an elastic body which has a small spring constant, and has the weak press-clamping force, and accordingly, an amount of the friction torque produced by the friction force may be set smaller.

The initial value of the cut-off torque can be set to a predetermined value by increasing an amount of the ride-over torque; however, if vibrations or torque variations are applied, the clamped friction surfaces cause slight movements therebetween due to vibrations occurring because of the weak friction force, resulting in the increase in the friction coefficient due to the slight movements, and accordingly, an amount of the friction torque produced by the friction force increases from an initial set value of the friction torque.

Thus, according to the conventional example, the cut-off torque, which is the total of the friction torque and the ride-over torque, increases from the initial set value, resulting in the damage to the V-belt or the bearing.

Furthermore, even in the conventional example, the spring constant can be increased by increasing a board thickness of the pressing member; however, this may result in increases in weight and cost. That is, in the present embodiment, it is possible to ensure the spring constant of the pressing member 40, which can produce the required press-clamping force, while decreasing the board thickness of the pressing member 40 from that in a conventional case, and thus, the weight and the cost can be also reduced.

Furthermore, in the present embodiment, since the hub 20 and the pressing member 40 are fastened with the rivet 41, the plurality of rivets 41 can be processed and fastened at the same time, and thus, a fastening force at each component, that is, the press-clamping force at the clamping portion corresponding thereto can be adjusted in high accuracy while suppressing variations, and adjusted easily. Thus, the initial value of the cut-off torque can be set at high accuracy. In contrast, when a bolt is used in the fastening, the number of adjusting processes may increase since a plurality of fastening processes needs to be done separately, and variations of the fastening force at each component, that is, variations of the press-clamping force at the clamping portion corresponding thereto are likely to occur, and accordingly, it may be difficult to set the initial value of the cut-off torque with high accuracy.

According to the present embodiment, the fastening point, at which the rivet 41 is fastened, is arranged on the line connecting the protrusion 32d, which is positioned at the center portion of the clamped area (illustrated by hatching in the upper part of FIG. 2) in which the clamped portion 32c is brought into contact with and clamped between the pressing portion 40b and the flange portion 22, and the rotation center of the shaft 2. Accordingly, the distance between the fulcrum and the point of application of the pressing member 40 acting as the elastic body can be shortened as much as possible, so that the spring constant can increase to a maximum.

However, the spring constant of the pressing member can be sufficiently increased when the fastening point of the rivet is arranged in a range defined by a central angle (i.e., an angle formed by two radii connecting the rotation center of the shaft 2 and rotation direction edges of both sides of the clamped area, as illustrated in FIG. 2 by "θ") corresponding to the clamped area of each clamped portion, and in addition, the spring constant can be increased only by arranging the fastening point at a location closer to one of adjacent clamped portions than the location equidistant from the adjacent clamped portions, to achieve the advantageous effects of the present invention.

Furthermore, according to the present embodiment, the elastic member 30 that transmits the drive force and cuts off the transmission in a serious situation is clamped by the hub 20, which is the driven-side rotating member, and the pressing member 40; however, an elastic member having similar functions may be employed as a component clamped between the driving-side rotating member and the pressing member fastened with a rivet to the driving-side rotating member, and may be configured so that the fastening point of the rivet is arranged closer to one of adjacent clamped portions than a location equidistant from the adjacent clamped portions. Moreover, in this case, since it is not preferable to fasten the pulley with the rivet because of workability, maintenability, or the like, a driving-side rotating member, which is separated from the pulley, and the pressing member are fastened with the rivet, and then, an assembly press-clamping the clamped portion of the elastic member between the driving-side rotating member and the pressing member may be detachably connected to the pulley with a bolt, or the like.

### REFERENCE SIGNS LIST

- 1: Compressor
- 2: Shaft
- 10: Pulley
- 10a: Inner peripheral surface
- 11: Bearing
- 20: Hub
- 22: Flange portion
- 22b: Protruding portion
- 30: Elastic member
- 31: Main body
- 31a: Opening
- 32: Extending portion
- 32a: Inclined portion
- 32c: Clamped portion
- 32d: Protrusion
- 40: Pressing member
- 40b: Pressing portion
- 40c: Engaging hole

## Claims

1. A power transmission device comprising:
a driven-side rotating member that is connected to a rotating shaft end of a driven-side device;
a driving-side rotating member that is rotated by a drive force provided from outside and concentrically disposed on an outer peripheral side of the rotating shaft end;
an elastic pressing member that is fastened to one of the driven-side rotating member and the driving-side rotating member with a plurality of rivets at fastening portions arranged around an axis of the rotating shaft, the pressing member including a plurality of pressing portions that protrudes outward or inward from the fastening portions in a diameter direction and is arranged around the axis of the rotating shaft; and
an elastic member that is secured to the other of the driven-side rotating member and the driving-side rotating member, and includes a plurality of clamped portions, each of the clamped portions being press-clamped between the one of the driving-side rotating member and the driven-side rotating member and each of the pressing portions in a state that the clamped portion is elastically deformed in an axial direction of the rotating shaft, to transmit a drive force of the driving-side rotating member to the driven-side rotating member,
wherein the power transmission device has a torque limiting function in which when the rotating shaft is overloaded, the clamping of the clamped portion is released in a rotation direction, and the clamped portion is returned elastically thereby, so that a power transmission from the driving-side rotating member to the driven-side rotating member is cut off, and
wherein a fastening point of the rivet is arranged around the axis of the rotating shaft and at a location closer to one of the adjacent clamped portions than a location which is equidistant from the adjacent clamped portions.

2. The power transmission device according to claim 1, wherein the fastening point of the rivet is arranged in a range defined by a central angle corresponding to a clamped area of each of the clamped portions.

3. The power transmission device according to claim 1, wherein the fastening point of the rivet is arranged on a line connecting a center portion of a clamped area of each of the clamed portions and a rotation center of the rotating shaft.

4. A compressor equipped with a power transmission device comprising:
a driven-side rotating member that is connected to a rotating shaft end of a driven-side device;
a driving-side rotating member that is rotated by a drive force provided from outside and concentrically disposed on an outer peripheral side of the rotating shaft end;
an elastic pressing member that is fastened to one of the driven-side rotating member and the driving-side rotating member with a plurality of rivets at fastening portions arranged around an axis of the rotating shaft, the pressing member including a plurality of pressing portions that protrudes outward or inward from the fastening portions in a diameter direction and is arranged around the axis of the rotating shaft; and
an elastic member that is secured to the other of the driven-side rotating member and the driving-side rotating member, and includes a plurality of clamped portions, each of the clamped portions being press-clamped between the one of the driving-side rotating member and the driven-side rotating member and each of the pressing portions in a state that the clamped portion is elastically deformed in an axial direction of the rotating shaft, to transmit a drive force of the driving-side rotating member to the driven-side rotating member,
wherein the power transmission device has a torque limiting function in which when the rotating shaft is overloaded, the clamping of the clamped portion is released in a rotation direction, and the clamped portion is returned elastically thereby, so that a power transmission from the driving-side rotating member to the driven-side rotating member is cut off, and
wherein a fastening point of the rivet is arranged around the axis of the rotating shaft and at a location closer to one of the adjacent clamped portions than a location which is equidistant from the adjacent clamped portions.
